Europäisches Patentamt

European Patent Office

Office européen des brevets

(19)

(11) **EP 1 544 428 A1**

(12) **EUROPEAN PATENT APPLICATION**
published in accordance with Art. 158(3) EPC

(43) Date of publication:
**22.06.2005 Bulletin 2005/25**

(21) Application number: **03792839.7**

(22) Date of filing: **26.08.2003**

(51) Int Cl.[7]: **F01N 3/08**, F01N 3/02,
F01N 3/24

(86) International application number:
**PCT/JP2003/010751**

(87) International publication number:
**WO 2004/018850 (04.03.2004 Gazette 2004/10)**

(84) Designated Contracting States:
**AT BE BG CH CY CZ DE DK EE ES FI FR GB GR
HU IE IT LI LU MC NL PT RO SE SI SK TR**

(30) Priority: **26.08.2002 JP 2002244502**

(71) Applicant: **Hitachi, Ltd.
Tokyo 100-8280 (JP)**

(72) Inventors:
 • **KAMIKAWA, Masayuki,
 Power & Ind. Syst. R&D Lab.
 Hitachi-shi, Ibaraki 319-1221 (JP)**
 • **IIZUKA, Hidehiro, Power & Ind. Syst. R&D Lab.
 Hitachi-shi, Ibaraki 319-1221 (JP)**

 • **KANEEDA, Masato, Power & Ind. Syst. R&D Lab.
 Hitachi-shi, Ibaraki 319-1221 (JP)**
 • **HIGASHIYAMA, Kazutoshi,
 Power & Ind. Syst. R&D Lab
 Hitachi-shi, Ibaraki 319-1221 (JP)**
 • **KITAHARA, Yuichi, c/o Automotive Systems
 Hitachinaka-shi, Ibaraki 312-8503 (JP)**
 • **KURODA, Osamu, c/o Automotive Systems
 Hitachinaka-shi, Ibaraki 312-8503 (JP)**

(74) Representative: **Beetz & Partner Patentanwälte
Steinsdorfstrasse 10
80538 München (DE)**

(54) **APPARATUS AND METHOD FOR CLARIFYING EXHAUST GAS OF DIESEL ENGINE**

(57)     An apparatus for purifying an exhaust gas of a diesel engine, **characterized in that** it has an NOx adsorption and reduction type catalyst and a diesel particulate filter for oxidizing and removing particulate matters in the exhaust gas, which are provided in the flow route for the exhaust gas and are arranged in the above described order from the upstream of the flow of the exhaust gas. The above arrangement allows the elevation of the temperature of the catalyst with ease and the precise control of the temperature and atmosphere therein, resulting in the achievement of satisfactory NOx purification performance, and the employment of the NOx adsorption and reduction type catalyst allows the enhancement of the rate of reduction of the $NO_2$ captured, which shortens the time to keep a stoichiometric-rich atmosphere to a time of several seconds to several minutes.

FIG. 1

EP 1 544 428 A1

**Description**

Technical Field

The present invention relates to an apparatus and a method for purifying (clarifying) an exhaust gas of a diesel engine, and, more particularly, relates to an exhaust gas purifying apparatus and an exhaust gas purifying method that are used in vehicles such as automobiles, and purify an exhaust gas exhausted from the diesel engine for the purpose of preventing air pollution.

Background Art

Nowadays, exhaust gas components, such as nitrogen oxides (NOx), particulate matters (PM), hydrocarbon (HC), and carbon monoxide (CO), are subject to the exhaust emission control of a diesel engine.

Main components of the PM are soot, that is, carbon (C), hydrocarbon, soluble organic fraction (SOF), and sulfur content. However, as the engine load increases, the PM is exposed to a high temperature exhaust gas. Consequently, the hydrocarbon or the SOF vaporizes, and the carbon will occupy most of the PM components. For this reason, the PM stands for the carbon (C) hereinafter.

Various technologies that purify these exhaust gas components have been developed up to this day.

For example, as disclosed in JP-A No. 199423/2000 of the Japanese Laid-Open Patent Publication, there is an exhaust gas purifying apparatus for a diesel engine in which, on the way of an exhaust route of the diesel engine, an oxidation catalyst, a diesel particulate filter (DPF) that collects the particulate matters in an exhaust gas, and an NOx catalyst are provided from the upstream side, toward a flow of the exhaust gas, and, furthermore, a fuel addition apparatus (fuel addition nozzle) that injects an additive (fuel) for reducing NOx in the exhaust gas is provided between the diesel particulate filter (DPF) and the NOx catalyst.

Besides, as disclosed in JP-A No. 170526/2000 of the Japanese Laid-Open Patent Publication, there is an exhaust gas purifying apparatus for a diesel engine in which, on the way of an exhaust route of the diesel engine, an NOx catalyst, an oxidation catalyst, and a particulate filter are provided sequentially from the upstream side, toward a flow of an exhaust gas, and an addition apparatus that injects an additive for reducing NOx in the exhaust gas is provided on the upstream side of the NOx catalyst, then, based on information about detection from the amount of accumulation detector that detects the amount of particulate matters accumulated in the particulate filter, the additive is injected from the addition apparatus when the amount of accumulation of particulate matters is below a fixed value.

Moreover, as disclosed in JP-A No. 119444/1995 of the Japanese Laid-Open Patent Publication, JP-A No. 295243/2002 of the Japanese Laid-Open Patent Publication, JP-A No. 349236/2002 of the Japanese Laid-Open Patent Publication, and JP-A No. 13732/2003 of the Japanese Laid-Open Patent Publication, there is an exhaust gas purifying apparatus in which an NOx catalyst and a particulate filter are provided sequentially from the upstream side, toward a flow of an exhaust gas, on the way of an exhaust route of a diesel engine, and fuel injection nozzle that injects an additive (fuel) for reducing NOx in the exhaust gas is provided on the upstream side of the NOx catalyst, or a copper-zeolite catalyst, a platinum catalyst, and the particulate filter are provided sequentially from the upstream side, toward the flow of the exhaust gas, on the way of the exhaust route of the diesel engine, and the fuel injection nozzle that injects the additive (fuel) for reducing the NOx in the exhaust gas is provided on the upstream side of the copper-zeolite catalyst.

Moreover, as disclosed in JP-A No. 336530/1999 of the Japanese Laid-Open Patent Publication, there is an exhaust gas purifying apparatus in which an NOx catalyst and a particulate filter are provided sequentially from the upstream side, toward a flow of an exhaust gas on the way of an exhaust route of the diesel engine, and that supplies the exhaust gas with fuel that is a reducing agent necessary for reducing NOx by performing a fuel secondary injection (post injection) that injects the fuel to an engine combustion chamber in the expansion stroke or the exhaust stroke, apart from a main injection in the compression stroke of the diesel engine.

As the NOx catalysts used in an exhaust gas purifying apparatus, many NOx catalysts are adopted in which an NOx absorbent having capability of absorbing (occluding) NOx in an oxygen presence atmosphere, and a precious metal catalyst having capability of oxidizing hydrocarbon, in other words, a catalyst having capability of reducing and purifying the occluded NOx in an excess fuel atmosphere are supported together in a honeycomb structure (carrier) of porous ceramics. Specifically, an alkali metal such as Li, Na, K, or Cs, or an alkali earth metal such as Mg, Ca, or Ba, or a rare earth metal such as Y, La, Ce, Pr, Eu, Nd, or Dy, is enumerated as the NOx absorbent, and Pt is enumerated as the precious metal catalyst.

Besides, there are a platinum-barium-alumina catalyst, a copper ion exchange zeolite catalyst, and a metallosilicate catalyst as the NOx catalysts used in an exhaust gas purifying apparatus.

The foregoing NOx catalyst used in the conventional exhaust gas purifying apparatus is an occlusion type NOx catalyst that absorbs and captures NOx in a NOx absorbent as a compound. When the NOx absorbent (NOx scavenger) is BaO, NO is oxidized to $NO_2$ (refer to a formula (1)). Then the NO is absorbed (occluded) in the NOx absorbent using the NOx as a nitric compound $Ba(NO_3)_2$ (refer to a formula (2)).

$$NO + 0.5O_2 \rightarrow NO_2 \tag{1}$$

$$2NO_2 + 0.5O_2 + BaO \rightarrow Ba(NO_3)_2 \tag{2}$$

Because an occlusion type NOx catalyst is absorbed (occluded) in an NOx absorbent, the rate of reduction of captured NOx is slow, and the amount of consumption of a reducing agent is large. For this reason, the occlusion type NOx catalyst requires a long retention time of the reducing atmosphere in which much fuel is required, and is inferior in fuel economy. Moreover, the occlusion type NOx catalyst is hard to be satisfactory also with regard to durability.

The object of the present invention is to provide an exhaust gas purifying apparatus and an exhaust gas purifying method for a diesel engine that satisfactorily purifies an exhaust gas exhausted from the diesel engine for a long period of time by suppressing the deterioration of fuel economy to the minimum.

Disclosure of the Invention

An exhaust gas purifying apparatus for a diesel engine according to the present invention sequentially arranges an NOx adsorption and reduction type catalyst that adsorbs and reduces NOx in an exhaust gas, and a diesel particulate filter that collects particulate matters in the exhaust gas, from the upstream side of the exhaust gas, in an exhaust channel that exhausts the exhaust gas of the diesel engine.

The NOx adsorption and reduction type catalyst chemically adsorbs NOx in an NOx scavenger as it is, and includes at least one type of element chosen from potassium, sodium, magnesium, strontium, and calcium, at least one type of element chosen from a rare earth metal such as cerium, at least one type of element chosen from precious metals such as platinum, rhodium, and palladium, and at least one type of element chosen from titanium and silicon, and is a composite composed of a metal, metal oxides, or a composite oxide, and a composite in which the composite is carried in porous heat resistant metal oxides.

The exhaust gas purifying apparatus for the diesel engine according to the present invention further allows an oxidation catalyst to be arranged on the downstream side of the diesel particulate filter viewed from a flow of the exhaust gas.

The exhaust gas purifying apparatus for the diesel engine according to the present invention further includes heating means that heats the exhaust gas on the upstream side of the exhaust gas channel of the NOx adsorption and reduction type catalyst.

Moreover, the exhaust gas purifying apparatus for the diesel engine according to the present invention further includes heating means that heats the diesel particulate filter.

The exhaust gas purifying apparatus for the diesel engine according to the present invention includes NOx amount estimation means that estimates an amount of NOx accumulated in the NOx adsorption and reduction type catalyst from a measured value of a physical quantity that stands for an operation condition of the diesel engine such as temperature, an air-fuel ratio, oxygen concentration, and a lean operation time an exhaust gas that flows into the NOx adsorption and reduction type catalyst, and a control means that, when the amount of accumulated NOx estimated by the NOx amount estimation means reaches a fixed value, performs control of increasing the temperature of the exhaust gas flowing into the NOx adsorption and reduction type catalyst to the temperature necessary for NOx reduction and purification, and supplying fuel that is a reducing agent necessary for reducing accumulated NOx into the exhaust gas.

The exhaust gas purifying apparatus for the diesel engine according to the present invention supplies fuel that is a reducing agent necessary for reducing NOx to an exhaust gas by increasing the amount of fuel supplied to the diesel engine.

Moreover, the exhaust gas purifying apparatus for the diesel engine according to the present invention supplies fuel that is necessary for reducing the NOx to an exhaust gas by a fuel secondary injection that injects the fuel into an engine combustion chamber in an expansion stroke or an exhaust stroke of the diesel engine.

Moreover, the fuel emission control system of the diesel engine according to the present invention includes exhaust gas temperature measuring means that measures the temperature of an exhaust gas that flows into the diesel particulate filter, exhaust gas temperature judgment means that judges the exhaust gas temperature measured by the exhaust gas temperature measuring means to be lower than a predetermined temperature, particulate capture amount estimation means that estimates the amount of particulates captured by the diesel particulate filter, and heating means that heats the exhaust gas. When an estimated value of the amount of particulate estimated by the amount of particulate estimation means reaches a predetermined capture amount and the exhaust gas temperature is judged by the exhaust gas temperature judgment means to be lower temperature than the predetermined temperature, control of heating the exhaust gas at the predetermined temperature is performed by the heating means, and the particulates captured by the diesel particulate filter are burned and removed.

The exhaust gas purifying apparatus for the diesel engine according to the present invention allows an NOx catalyst and a diesel particulate filter to be installed sequentially from the upstream side of a flow of an exhaust gas, and to use an NOx adsorption and reduction type catalyst as the NOx catalyst. Therefore, as compared with the NOx occlusion and reduction type catalyst, the speed of reduction of the captured $NO_2$ is fast, and the time when a stoichiometric-rich atmosphere is retained can be shortened to several seconds to several minutes.

Brief Description of the Drawings

Fig. 1 is a schematic illustration showing an outline of an exhaust gas purifying apparatus for a diesel engine according to the present invention;

Fig. 2 is a schematic illustration showing an embodiment of the exhaust gas purifying apparatus for the diesel engine according to the present invention;

Fig. 3 is a schematic illustration showing a further embodiment of the exhaust gas purifying apparatus for the diesel engine according to the present invention;

Fig. 4 is a schematic illustration showing another embodiment of the exhaust gas purifying apparatus for the diesel engine according to the present invention;

Fig. 5 is a schematic illustration showing an embodiment in which the exhaust gas purifying apparatus according to the present invention is applied to a direct injection diesel engine;

Fig. 6 is a block diagram of air-fuel ratio control in the exhaust gas purifying apparatus for the diesel engine according to the present invention;

Fig. 7 is a flowchart of the air-fuel ration control;

Figs. 8 to 12 are flowcharts of the amount of NOx estimation processing respectively;

Fig. 13 is a block diagram of exhaust temperature control in the exhaust gas purifying apparatus for the diesel engine according to the present control;

Fig. 14 is a flowchart of the exhaust temperature control; and

Figs. 15 to 17 are flowchart portions of the amount of PM estimation processing respectively.

Best Mode for Carrying Out the Invention

Ideal embodiments according to the present invention are described with reference to appended drawings.

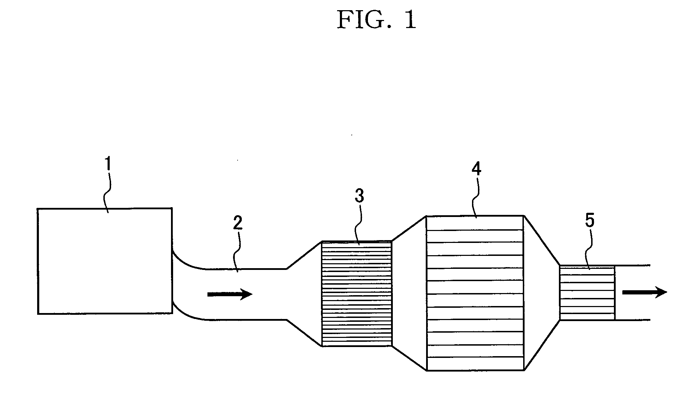

Fig. 1 shows an outline of an exhaust gas purifying apparatus for a diesel engine according to the present invention. An exhaust gas exhausted from a diesel engine 1 is purified by an NOx purification catalyst 3, a diesel particulate filter (hereinafter referred to as a DPF) 4, and an oxidation catalyst 5 in the process of an exhaust gas channel 2, that is, of passing through an exhaust pipe.

Because the present invention allows the NOx purification catalyst 3 to be arranged on the upstream side of a flow of an exhaust gas than the DPF 4 or the oxidation catalyst 5 toward the flow of the exhaust gas, and because a catalyst temperature is easy to rise, and the precise control of temperature and an atmosphere is enabled, sufficient NOx purification performance can be obtained.

Changing an exhaust gas into a reducing atmosphere is enabled by using a fuel secondary injection that injects the second fuel into an engine cylinder (combustion chamber) in the expansion stroke or the exhaust stroke in addition to a normal fuel injection (main injection) in the diesel engine 1 without providing a special reducing agent addition apparatus.

Because the NOx purification catalyst 3 is provided on the upstream side than the DPF 4 toward a flow of an exhaust gas, there is no more than a small fear of the deterioration of the NOx purification catalyst 3 caused by the heat and SOx generated when PM is burned in the DPF 4.

Moreover, because NOx is purified by the NOx purification catalyst 3 on the upstream side than the DPF 4, and the NOx is not used for the removal of PM, an NOx discharge is suppressed. Moreover, in the DPF 4, even if the PM is partly burned incompletely, and CO or HC is generated, the CO or HC can be oxidized and purified by allowing the oxidation catalyst 5 to be arranged on the downstream side than the DPF 4.

In the present invention, in order to reduce and purify NOx, a state in which there are many reducing agents in comparison with a lean operation is created, and, at the same time, the timing at which an exhaust gas or the NOx purification catalyst 3 is heated can conform to each of the following methods (1) to (5) so that the temperature at which the NOx purification catalyst 3 functions sufficiently may be reached, when:

(1) an NOx discharge during the lean operation is estimated from an air-fuel ratio (the amount of fuel injection) setting signal, an engine speed signal, an intake air volume signal, an intake pipe pressure signal, a speed signal, a throttle opening, and an exhaust gas temperature that are determined by an ECU (engine control unit) that performs the operation control of the diesel engine 1, and the integrated value has exceeded a fixed setting value;

(2) the amount of accumulated oxygen is detected using a signal of an oxygen sensor (or an A/F sensor) arranged on the upstream side or the downstream side of the NOx purification catalyst 3 of the exhaust channel 2, and the amount of accumulated oxygen has exceeded a fixed amount;

(3) the amount of accumulated oxygen during the lean operation has exceeded a fixed amount as a modified embodiment;

(4) the amount of accumulated NOx is calculated using a signal of an NOx sensor located on the upstream side of the NOx purification catalyst 3 of the exhaust channel 2, and the amount of accumulated NOx during the lean operation has exceeded a fixed amount; and

(5) NOx concentration during the lean operation is detected using a signal of an NOx sensor located on the upstream side of the NOx purification catalyst 3 of the exhaust channel 2, and the NOx concentration has exceeded fixed concentration,

The time when a state in which there are many reducing agents is maintained in comparison with a lean operation or the number of reducing agents that are projected so as to be maintained can be determined considering the characteristics of the NOx purification catalyst 3 or the specifications and characteristics of the diesel engine 1 beforehand, as described previously. These can be realized by adjusting a stroke, an injection time, and injection intervals in fuel injection valve of the diesel engine 1.

In the present invention, in order to burn and remove PM collected in the DPF 4, the timing at which an exhaust gas or the DPF 4 is heated can conform to each of the following methods so that temperature at which the PM starts burning may be reached, when:

(1) an NOx discharge during a lean operation is estimated from an air-fuel ratio (the amount of fuel injection) setting signal, an engine speed signal, an intake air volume signal, an intake pipe pressure signal, a speed signal, a throttle opening, and an exhaust gas temperature that are determined by an ECU (engine control unit) that performs the operation control of the diesel engine 1, and the integrated value has exceeded a fixed setting value;

(2) the amount of accumulated PM is estimated using a signal of a pressure sensor located on the upstream side or the downstream side of the DPF 4 of the exhaust channel 2, and the accumulated value has exceeded a fixed setting value; and

(3) the amount of accumulated PM is estimated from a difference in the signal of a pressure sensor located on the upstream side and the downstream side than the DPF 4 of the exhaust channel 2 as the modified embodiment, and the amount of accumulated PM has exceeded a fixed amount.

There is an NOx adsorption and reduction type catalyst that adsorbs and reduces NOx, an NOx occlusion and reduction type catalyst, or an NOx selection and reduction type catalyst as the NOx purification catalyst 3. Typically, a honeycomb-shaped monolith type catalyst can be used which is constructed by adding an alkali metal such as K or Na, an alkali earth metal, such as Ca or Ba, a transition metal, such as Ti, Mn, Fe, or Cu, a rare earth metal such as Zr or Ce, or the Zr or these optional combinations to a fire resistant inorganic material of a high ratio surface area such as alumina, in which a precious metal is carried.

The embodiments of the present invention are described below.

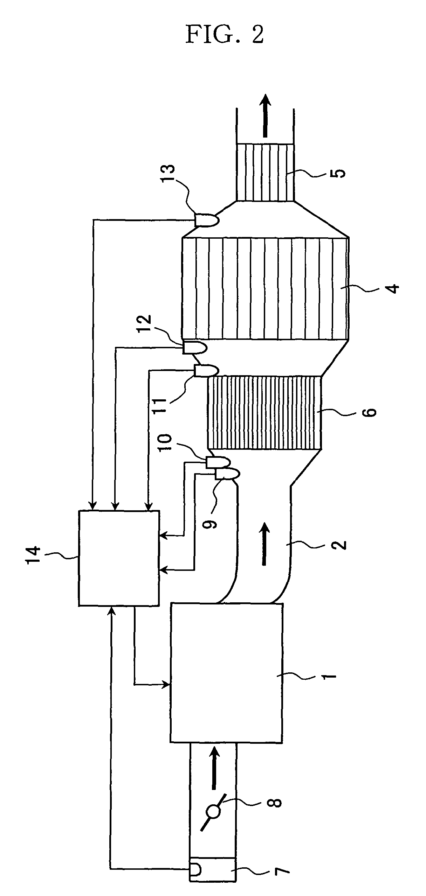

Fig. 2 shows the diesel engine 1 and its intake and exhaust system, and an engine control unit (ECU) 14. The exhaust gas purifying apparatus of the present invention is provided in the exhaust system.

The exhaust gas purifying apparatus of this embodiment arranges an NOx adsorption and reduction type catalyst 6, the diesel particulate filter (DPF) 4 that oxidizes and removes particulate matters in an exhaust gas, and the oxidation catalyst 5 from the upstream side, viewed from a flow of an exhaust gas that flows in the exhaust gas channel 2 of the diesel engine 1.

An oxygen concentration sensor (or A/F sensor) 9 and an exhaust temperature sensor 10 are provided on the upstream side of an NOx adsorption and reduction type catalyst 6. A pressure sensor 11 and an exhaust temperature sensor 12 are provided on the downstream side of the NOx adsorption and reduction type catalyst 6, and on the upstream side of the DPF 4. Furthermore, a further pressure sensor 13 is provided on the downstream side of the DPF 4.

An air flow sensor 7 that measures an intake air volume, and a throttle valve 8 that measures and controls the intake air volume are provided in the intake system of the diesel engine 1.

The DPF 4 has a PM capture function. As the DPF 4, for example, a ceramic caking body, a ceramic fiber, and a metal can be used. Filters of various forms or sizes can be selected properly in accordance with the space to be used, such as a filter around which the ceramic filter is wound in a coil form and which is molded in a cylindrical type, a filter in which the woven fiber is molded in a proper shape, and a wall flow type filter made of ceramics in which an exhaust gas route whose upstream side end is closed and whose downstream side end is opened, and an exhaust gas route whose upstream side end is opened and whose lower steam end is closed are arranged alternately, and in which a porous wall surface is formed between the adjacent exhaust gas routes. The wall flow type filter applies to this embodiment.

The oxidation catalyst 5 has a function of adsorbing and oxidizing CO, HC, NOx, and SOF and accelerating the combustion of PM. Various catalysts including precious metals (Pt and Pd), for example, Pt/zirconia and Pd/alumina as well as Pt/alumina in which the Pt is carried in the alumina can be illustrated as these catalysts.

Moreover, a three-way catalyst having a nitrogen oxides reduction function may also be used as the oxidation catalyst 5. Catalysts in which precious metals (Pt, Pd, and Rh) are carried in a carrier, such as alumina, for example, the Pt/alumina, the Pd/alumina, or the Rh/alumina are enumerated as these catalysts.

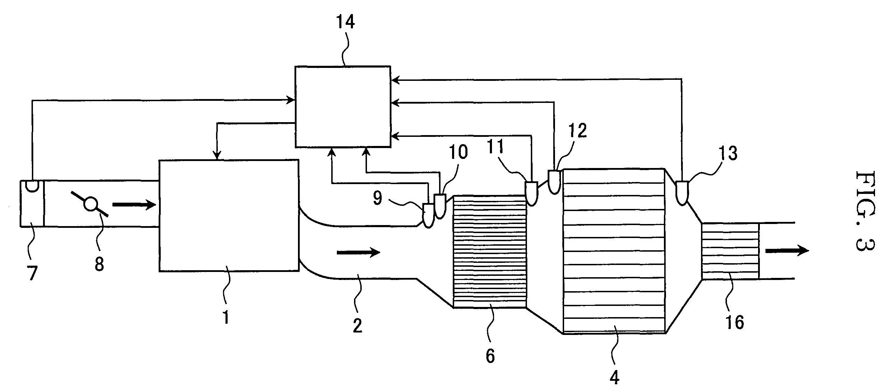

Moreover, a hydrocarbon adsorption and combustion catalyst 16 can also be used as an oxidation catalyst, as shown in Fig. 3.

A hydrocarbon adsorption and combustion catalyst 16 is an oxidation catalyst that adsorbs hydrocarbon in an exhaust gas when a catalyst temperature is low and the activity of the oxidation catalyst is low, and can burn the adsorbed hydrocarbon using the oxidation catalyst when the catalyst temperature rises and the activity of the oxidation catalyst increases.

Catalysts consisting of an alkali metal such as Cs, having an acid carried in zeolite using the zeolite as a carrier, an alkali earth metal, such as Ca, a first metal oxide composed of a transition metal such as Cu or Ag, a rare earth metal such as Ce or La having oxygen occlusion and emission capability, or a second metal oxide such as Zr, and a precious metal carried in a porous carrier are enumerated as these catalysts.

The NOx adsorption and reduction type catalyst 6 arranged on the upstream side of the DPF 4 chemically adsorbs NOx in an NOx scavenger. For example, as disclosed in JP-A No. 3107294 of the Japanese Patent Publication, the catalyst 6 includes at least one type of an element chosen from potassium, sodium, magnesium, strontium, and calcium, at least one type of an element chosen from a rare earth metal such as cerium, at least one type of an element chosen from a precious metal such as platinum, rhodium, or palladium, and at least one type of an element chosen from titanium or silicon, and is a composite composed of a metal, metal oxides, or a compound oxide, or a composite in which the composite is carried in porous heat resistant metal oxides.

In addition, the NOx adsorption and reduction type catalyst 6, as disclosed in JP-A No. 118458/1998 of the Japanese Laid-Open Patent Publication, is composed of an alkali metal and titanium, and, as disclosed in JP-A No. 10932/1998 of the Japanese Laid-Open Patent Publication, is composed of a composite of the alkali metal and the titanium.

The mechanism of NOx capture caused by the adsorption the NOx adsorption and reduction type catalyst 6 performs chemically adsorbs the $NO_2$ generated on a precious metal (refer to the Formula (1)) on the surface of an NOx absorbent with the $NO_2$ left behind as is (refer to a formula (3)).

$$NO_2 + NOx \text{ Absorbent} \rightarrow NO_2\text{-NOx Absorbent} \tag{3}$$

The captured NOx, that is, the $NO_2$ chemically adsorbed on the surface of an NOx absorbent is reduced and purified to $N_2$ using a reducing agent the HC, CO, and $H_2$ in an exhaust gas produce when the exhaust gas is in a stoichiometric-rich atmosphere (hereinafter referred to as an excess fuel atmosphere or a non-oxygen atmosphere as a general) (refer to a formula (4)).

$$NO_2\text{-}NO_x \text{ Absorbent} + HC, CO, H_2 \rightarrow N_2 + CO_2 + H_2O + NOx$$

$$\text{Absorbent} \tag{4}$$

The chemical adsorption in which $NO_2$ is adsorbed on the surface of an NOx absorbent is fast in the rate of reduction of the captured $NO_2$, and the time when a stoichiometric-rich atmosphere is retained can be shortened to several seconds to several minutes. This allows fuel economy to be improved.

High NOx purification performance is obtained in a diesel engine by selectively obtaining a stoichiometric-rich atmosphere using this exhaust gas purifying apparatus. Because the diesel engine basically performs a lean operation, the diesel engine must be controlled so that the air-fuel ratio of an exhaust gas that flows into the NOx adsorption and reduction type catalyst 6 may be made stoichiometric-rich. This control includes a fuel secondary injection and a decrease in oxygen concentration by an intake venturi.

The ECU 14 uses a microcomputer system, and is provided with an I/O-LSI as an input/output interface, an MPU (micro processing unit), a RAM and a ROM that store many control programs, and a timer counter.

In this embodiment, the exhaust gas exhausted from the diesel engine 1, first, flows into the NOx adsorption and reduction type catalyst 6. After the NOx adsorption and reduction type catalyst oxidizes NO in the exhaust gas to $NO_2$ during a normal lean operation, the catalyst chemically adsorbs this $NO_2$. Before the adsorbed $NO_2$ reaches the amount of $NO_2$ equilibrium adsorption of the NOx adsorption and reduction type catalyst 6, the exhaust gas is made into a reducing atmosphere (stoichiometric-rich), and reduces and purifies the absorbed $NO_2$ to nitrogen ($N_2$). As the means of changing the exhaust gas into the reducing atmosphere, there are a means of increasing hydrocarbon concentration (a fuel secondary injection of an engine), and a means of reducing oxygen concentration (an intake venturi), and both the means can be used at the same time. During the processing of increasing the hydrocarbon and the processing of decreasing the oxygen concentration, the catalyst temperature of the NOx adsorption and reduction type catalyst 6 is controlled from 250 to 500 °C. This is because the NOx purification capability of the NOx adsorption and reduction type catalyst 6 is excellent at the temperatures within the foregoing range.

The DPF 4 is a honeycomb type filter made of ceramics. Inside the DPF 4, this filter is a wall flow type filter in which an exhaust gas route whose upstream side end is closed and whose downstream side end is opened, and an exhaust gas route whose upstream side end is opened and whose lower end is closed are arranged alternately, and in which a porous wall surface is formed between the adjacent exhaust gas routes.

Accordingly, the exhaust that flows into the DPF 4 flows into an exhaust gas channel whose upstream side end is opened and whose downstream side end is closed, and subsequently, from a porous wall surface provided between the adjacent exhaust gas channels, flows into an exhaust gas channel whose upstream side end is closed and whose downstream side is opened, and flows out to the downstream side. In this process, the PM in a diesel exhaust gas is collected by a collision onto the wall surface or adsorption.

The PM collected by the DPF 4 is burned and removed (ashed and removed) by allowing an exhaust gas temperature to increase when a fixed amount of the PM is accumulated. The method for increasing the exhaust gas temperature may be either by engine control or by the heat of reaction of the catalyst arranged on the upstream side of the DPF 4.

A part of the PM burned in the DPF 4 changes into CO by incomplete combustion, and there is a fear of even unburned HC being exhausted.

For this reason, the oxidation catalyst 5 is arranged on the downstream side of the exhaust gas channel of the DPF 4, and the oxidation catalyst 5 oxidizes and purifies the CO and unburned HC that were generated by the incomplete combustion of the PM. Moreover, the oxidation catalyst 5 is not consumed by the NOx adsorption and reduction type catalyst 6 or the DPF 4 except for the PM combustion, but oxidizes and purifies the HC or CO included in an exhaust gas.

The action of this oxidation catalyst 5 is obtained in the same manner even in the case of the hydrocarbon adsorption and combustion catalyst 16 shown in Fig. 3. Besides, in the case of the hydrocarbon adsorption and combustion catalyst 16, even if the catalyst temperature of an HC adsorption and combustion catalyst is low, and the HC included in the exhaust gas cannot be burned and purified such as immediately after an engine starts, the discharge of the HC can be reduced by adsorbing and retaining the HC until the temperature at which the catalyst can sufficiently burn and purify the HC is reached.

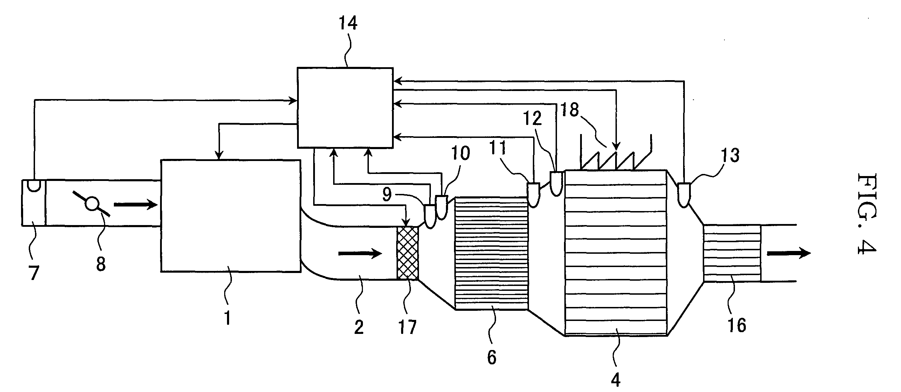

The embodiment shown in Fig. 4 further adds a heater 17 that heats an exhaust gas that flows into the NOx adsorption and reduction type catalyst 6 and a heater 18 that heats the DPF 4. Another configuration is the same as the embodiment shown in Fig. 2.

In this embodiment, first, an exhaust gas exhausted from the diesel engine 1 is heated by the heater 17, and the HC in the exhaust gas is dissolved. The hydrocarbon in the exhaust gas exhausted from the diesel engine 1 is often higher hydrocarbon whose number of carbons is 7 or more. Accordingly, the NOx reduced reaction in the NOx adsorption and reduction type catalyst 6 on the downstream side of an exhaust gas channel can be advanced by dissolving the hydrocarbon by the heater 17 and increasing a ratio of lower hydrocarbon whose number of carbons is less than 6.

Moreover, the heater 17 heats an exhaust gas according to an instruction of the ECU 4 when an exhaust temperature rise is judged to be necessary by the ECU 14 in the NOx purification in the NOx adsorption and reduction type catalyst 6 and the combustion and removal of the PM in the DPF 4.

The heater 18 heats the DPF 4 according to an instruction of the ECU 14 when the rise of the DPF temperature is judged to be necessary by the ECU 14 in the combustion and removal of the PM in the DPF 4.

The exhaust gas purification performance can be improved further by providing the heaters 17 and 18.

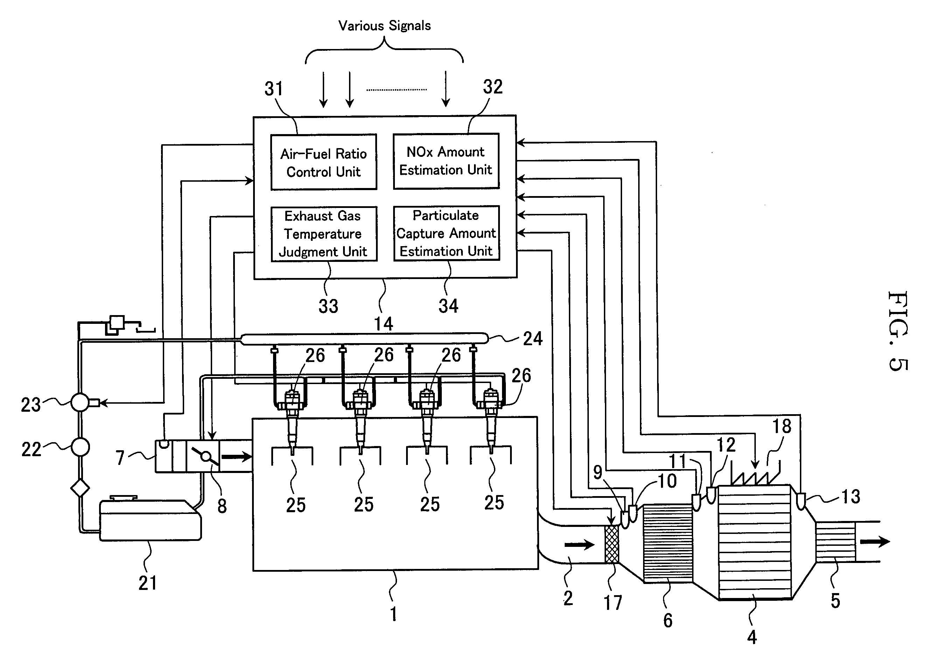

Fig. 5 shows one embodiment of a direct injection diesel engine to which the exhaust gas purifying apparatus according to the present invention is applied.

A fuel system of the diesel engine 1 adopts an electronically controlled common rail system. In the common rail system, the fuel (diesel oil) of a fuel tank 21 is pressurized by a primary pump 22, and furthermore pressurized into the high pressure necessary for a direct injection by a high pressure pump 23. High pressure fuel is supplied to a common rail 24 that is an accumulated pressure volume portion.

Fuel injection nozzle (injector) 26 for direct injection for every combustion chamber 25 of the diesel engine 1 is connected to the common rail 24. The fuel injection nozzle 26 directly injects high pressure fuel to the combustion chamber 24. The amount of fuel injection and the fuel injection timing by the fuel injection nozzle 25 are controlled by the ECU 14.

The ECU 14 has an air-fuel ratio control unit (fuel supply-intake air volume control unit) 31 that controls the amount of fuel injection or the fuel injection time by the fuel injection nozzle 25 and the intake air volume by the motor-driven throttle valve 8, an amount of NOx estimation unit 32, an exhaust gas temperature judgment unit 33, and an amount of particulate capture estimation unit 34. These are embodied by allowing an MPU of the ECU 14 to execute a control program.

The amount of NOx estimation unit 32 estimates the amount of NOx stored in the NOx adsorption and reduction type catalyst 6 from a measured value of a physical quantity that stands for an operation condition of the diesel engine 1 such as temperature, an air-fuel ratio, oxygen concentration, a lean operation time, of an exhaust gas that flows into the NOx adsorption and reduction type catalyst 6.

When the amount of accumulated NOx estimated by the NOx amount estimation means 32 reaches a fixed value, the air-fuel ratio control unit 31 performs the control of increasing the temperature of the exhaust gas that flows into the NOx adsorption and reduction type catalyst 6 to the temperature necessary for the NOx reduction and purification, and supplying fuel that is a reducing agent necessary for reducing the accumulated NOx to the exhaust gas.

Supplying fuel that is a reducing agent necessary for reducing NOx to an external gas can be realized by increasing the amount of fuel supplied to the diesel engine 1 by the electronically controlled injector 26 controlling an intake air volume, and performing the fuel secondary injection in which the fuel is injected to the engine combustion chamber 25 by the electronically controlled injector 26 in the expansion stroke or the exhaust stroke of the diesel engine 1.

The exhaust gas temperature judgment unit 33 judges the exhaust gas temperature measured by the exhaust temperature sensor 12 that measures the exhaust temperature that flows into the DPF 4 is lower than a predetermined temperature.

The amount of particulate capture estimation unit 34 estimates the amount of particulate captured by the DPF 4.

When an estimated value of the amount of particulate estimated by the amount of particulate capture estimation unit 34 reaches a predetermined fixed amount of capture, and the exhaust gas temperature is judged to be a lower temperature than a predetermined temperature by the exhaust gas temperature judgment unit 33, the control of heating the exhaust gas into the predetermined temperature is performed by the heaters 17 and 18, and the particulate captured by the DPF 4 is burned and removed.

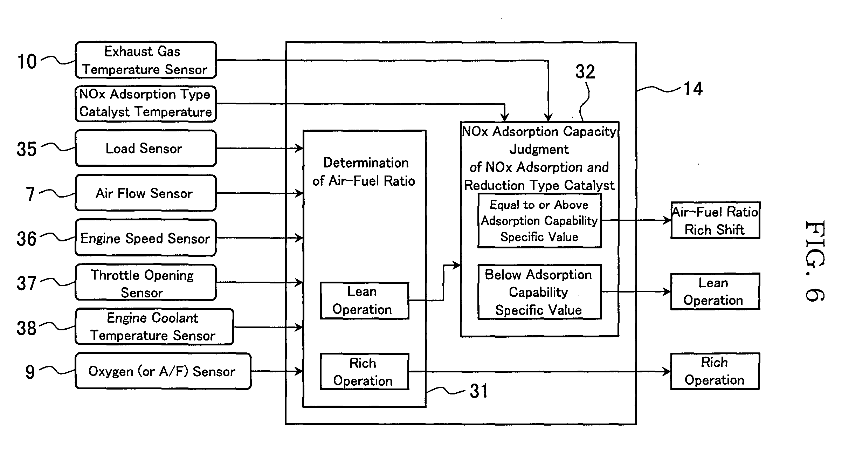

Fuel concentration (hereinafter referred to as an air-fuel ratio) of an air-fuel mixture supplied to the diesel engine 1 is controlled as follows. Fig. 6 is a block diagram of the air-fuel ratio control.

The air-fuel ratio control unit 31 of the ECU 14 determines an air-fuel ratio (A/F) from information about an output signal of a load sensor 35 that outputs a signal in accordance with the full pedal depression of an accelerator pedal, an output signal of the amount of intake measured by the air flow sensor 7, an engine speed signal detected by a crank angle sensor (engine speed sensor 36), an exhaust gas temperature signal outputted by the exhaust gas temperature sensor 10, an output signal of a throttle sensor 37 that detects a throttle opening, an engine coolant temperature signal outputted by an engine coolant temperature sensor 38, and a starter signal.

The air-fuel control unit 31 corrects this air-fuel ratio based on a signal fed back from the oxygen sensor 9, and determines the amount of fuel injection. Further, the control unit stops feedback control using a signal of each sensor and switch at low temperature, in an idling state, and in a high load. Moreover, an air-fuel ratio correction leaning function is used so that the air-fuel ratio correction learning function can cope with a fine change or a sudden change of an air-fuel ratio.

When the determined air-fuel ratio is in a reducing atmosphere, the injection condition of the injector 26 is determined according to the instruction of the ECU 14, and a rich operation is performed.

When a lean operation is determined, the existence of the NOx adsorption capability of the NOx adsorption and reduction type catalyst 6 is judged by the amount of NOx estimation unit 32. When the adsorption capability exceeds the fixed specific value (for example, 50% of the amount of equilibrium adsorption), the amount of fuel injection is determined so as to perform the lean operation as specified. On the contrary, when the adsorption capability is judged to be less than the fixed specific value, an air-fuel ratio is shifted to the rich side over a fixed period of time and the NOx adsorption and reduction type catalyst 6 is regenerated.

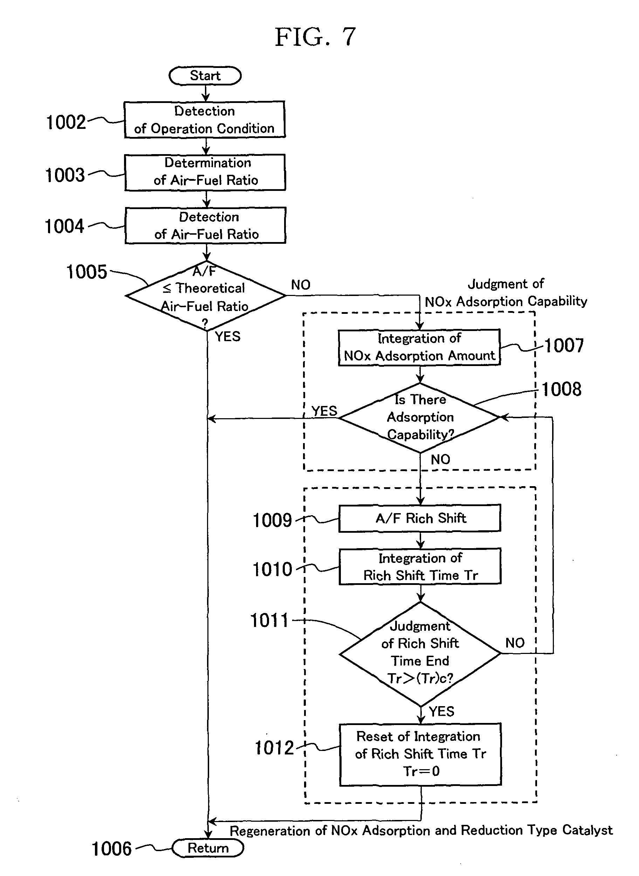

Fig. 7 is a flowchart of air-fuel ratio control.

First, in a step 1002, signals that instruct various operation conditions, or detect operation conditions are read. In a step 1003, an air-fuel ratio is determined based on these signals. In a step 1004, the determined air-fuel ratio is detected.

Subsequently, in a step 1005, the size between the determined air-fuel ratio and a theoretical air-fuel ratio is compared. The theoretical air-fuel ratio to be compared here is an air-fuel ratio in which the rate of the NOx contact reduced reaction excels a capture rate caused by adsorption in the NOx adsorption and reduction type catalyst 6, to be accurate, and is determined by previously estimating the characteristics of the NOx adsorption and reduction type catalyst 6, and the air-fuel ratio in the vicinity of the theoretical air-fuel ratio is selected.

When set air-fuel ratio ≤ theoretical air-fuel ratio, processing advances to a step 1006, and an air-fuel ratio operation is performed as specified without performing the regeneration operation of an NOx adsorption and reduction type catalyst.

On the contrary, when set air-fuel ratio > theoretical air-fuel ratio, processing advances to a step 1007. In the step 1007, an estimation operation of the amount of NOx adsorption is performed. The estimation operation method of the amount of NOx adsorption is described later.

Subsequently, in a step 1008, whether the estimated amount of NOx adsorption is less than a fixed limit (there is adsorption capability) or not is judged. The amount of critical adsorption is set to a value in which the NOx in an exhaust gas can sufficiently be purified by estimating NOx capture characteristics of the NOx adsorption and reduction type catalyst 6 by way of experimenting previously and considering the exhaust gas temperature or the NOx adsorption and reduction type catalyst temperature.

When there is NOx adsorption capability, processing advances to the step 1006, and air-fuel ratio operation is performed as specified without performing the regeneration operation of an NOx adsorption and reduction type catalyst. When there is no NOx adsorption capability, processing advances to a step 1009, and an air-fuel ratio is shifted to the rich side.

In a step 1010, a rich shift time Tr is counted and integrated, and, in a step 1011, whether an elapsed time Tr exceeds a fixed time (Tr) c or not is judged. a rich shift is performed only for the fixed time (Tr) c. When the elapsed time Tr exceeds the fixed time (Tr) c, in a step 1012, an integrated value of the rich shift time Tr is reset (cleared), and the rich shift is terminated.

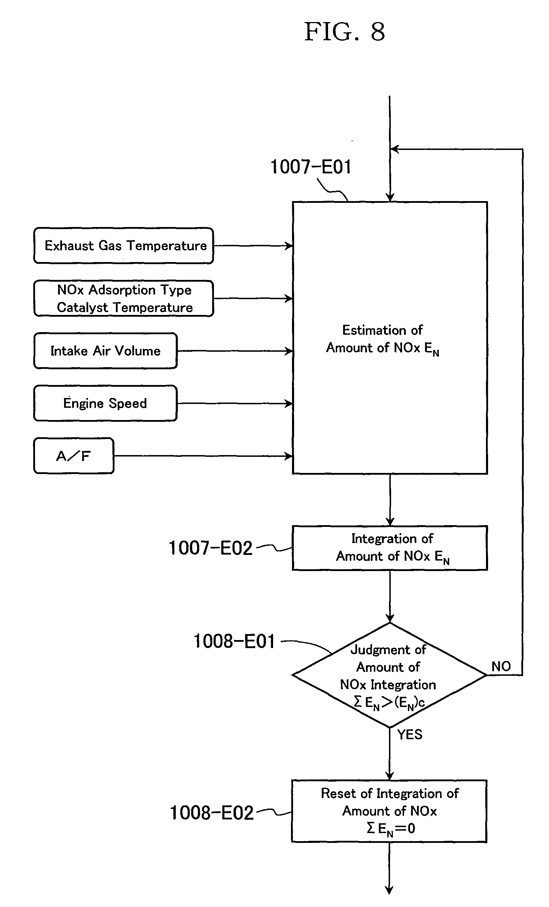

The NOx adsorption capability can be judged as follows. Fig. 8 is a flowchart of the processing that integrates and judges an NOx discharge from various operation conditions during a lean operation.

In a step 1007-E01, a signal regarding the action of the NOx adsorption and reduction type catalyst 6 such as an exhaust gas temperature, and a signal regarding various engine operation conditions that affect the NOx concentration in the exhaust gas are read, and an amount of NOx $E_N$ adsorbed in a unit hour is estimated.

In a step 1007-E02, the $E_N$ is integrated, and, in a step 1008-E01, the size between an integrated value $\Sigma E_N$ and the upper limit value $(E_N)c$ of the amount of adsorption is compared. If the condition of $\Sigma E_N \leq (E_N)c$ is satisfied, integration is continued. If the condition of $\Sigma E_N > (E_N)c$ is satisfied, in a step of 1008-E02, the integration is reset and processing advances to the step 1009.

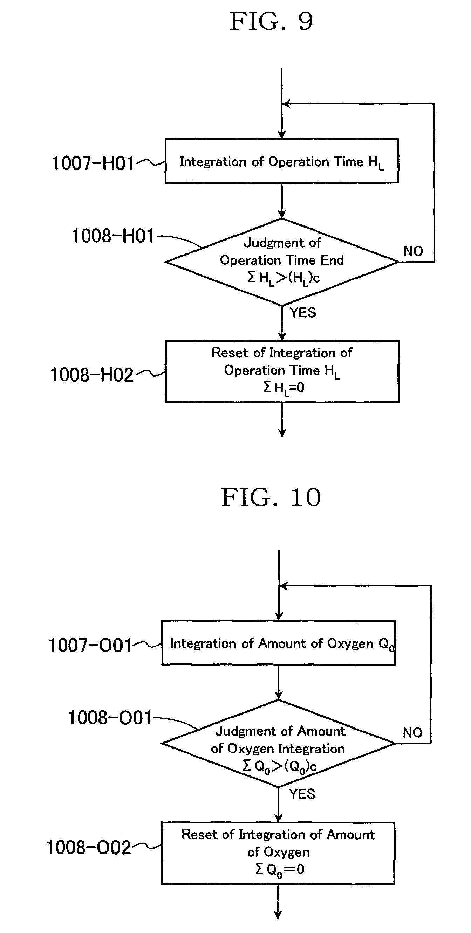

Fig. 9 is a flowchart of the processing that judges an operation time from the integration time of a lean operation.

In a step 1007-H01, a lean operation time $H_L$ is integrated, and, in a step 1008-H01, the size between an integrated value $\Sigma H_L$ and the upper limit value $(H_L)c$ of the integration time is compared. If the condition of $\Sigma H_L \leq (H_L)c$ is satisfied, the integration is continued. If the condition of $\Sigma H_L > (H_L)c$ is satisfied, in a step 1008-H02, the integration is rest, and processing advances to the step 1009.

Fig. 10 is a flowchart of the processing that judges an amount of oxygen using an oxygen sensor signal during a lean operation.

In a step 1007-001, an amount of oxygen $Q_0$ during the lean operation is integrated, and, in a step 1008-001, the size between an integrated value $\Sigma Q_0$ and the upper limit value $(Q_0)c$ of an integrated oxygen value is compared. If the condition of $\Sigma Q_0 \leq (Q_0)c$ is satisfied, integration is continued. If the condition of $\Sigma Q_0 > (Q_0)c$ is satisfied, in a step 1008-002, the integration is reset, and processing advances to the step 1009.

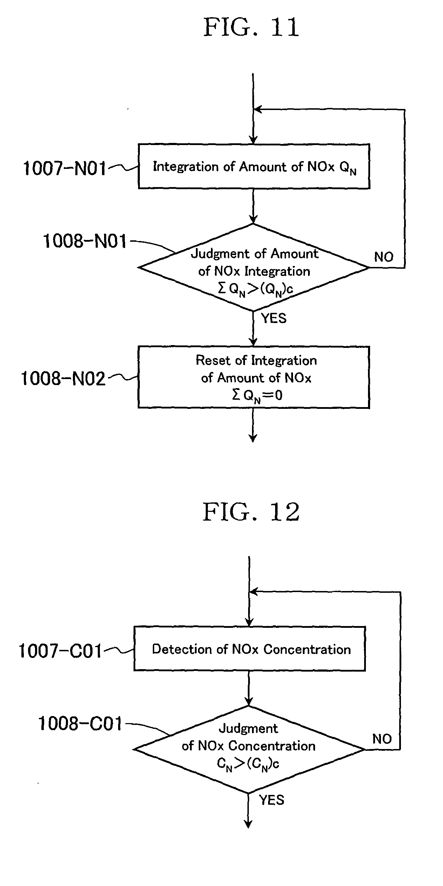

Fig. 11 is a flowchart of the processing that judges an NOx discharge using an NOx concentration sensor signal detected at the entrance of the NOx adsorption and reduction type catalyst during a lean operation.

In a step 1007-N01, an amount of NOx $Q_N$ at the entrance of the NOx adsorption and reduction type catalyst is integrated based on an NOx concentration sensor signal. In a step 1008-N01, an integrated value $\Sigma Q_N$ and the upper limit value $(Q_N)c$ of the amount of integrated NOx is compared. If the condition of $\Sigma Q_N \leq (Q_N)c$ is satisfied, integration is continued. If the condition of $\Sigma Q_N > (Q_N)c$ is satisfied, in a step 1008-N02, the integration is reset, and processing advances to the step 1009.

Fig. 12 is a flowchart of the processing that judges NOx concentration using an NOx concentration sensor signal detected at the entrance of the NOx adsorption and reduction type catalyst during a lean operation.

In a step 1007-C01, an NOx concentration $C_N$ at the entrance of an NOx adsorption and reduction type catalyst is detected based on an NOx concentration sensor signal. In a step 1008-C01, the size between $C_N$ and the upper limit $(C_N)c$ of the $C_N$ is compared. If the condition of $C_N \leq (C_N)c$ is satisfied, detection is continued. If the condition of $C_N > (C_N)c$ is satisfied, processing advances to the step 1009.

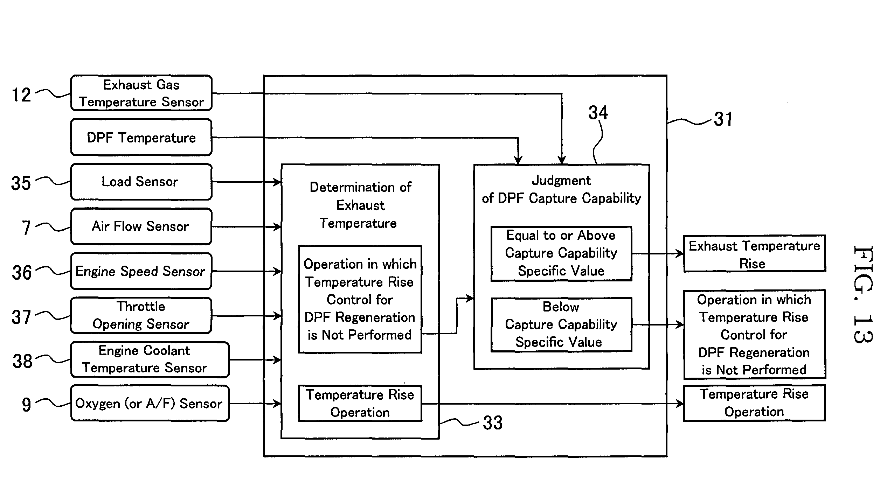

An exhaust gas temperature (hereinafter referred to as an exhaust temperature) for DPF regeneration is controlled as follows. Fig. 13 is a block diagram of the exhaust temperature control.

The exhaust gas temperature judgment unit 33 of the ECU 14 determines an exhaust temperature from information about an output signal of a load sensor 35 that outputs a signal in accordance with the full pedal depression of an accelerator pedal, an output signal of the amount of intake measured by the air flow sensor 7, an engine speed signal detected by a crank angle sensor (engine speed sensor 36), an exhaust gas temperature signal the exhaust gas temperature sensor 12 outputs, an output signal of a throttle sensor 37 that detects a throttle opening, an engine coolant temperature signal an engine coolant temperature sensor 38 outputs, and a starter signal.

This exhaust temperature is further corrected based on a signal fed back from the oxygen sensor 2, and determines the amount of heat supplied from the diesel engine 1. Further, at low temperature, in idling operation, and in a high load, feedback control is stopped using a signal of each sensor and switch. Moreover, an air-fuel ratio correction leaning function is used so that the air-fuel ratio correction learning function can cope with even a fine change or a sudden change of an air-fuel ratio.

When the determined exhaust temperature is PM combustion start temperature, the amount of heat supply condition by the engine 1 is determined according to an instruction of the ECU 31, and the heating of exhaust is performed.

On the other hand, when operation in which temperature rise control for DPF regeneration is not performed is determined, whether the PM capture capability of the DPF 4 is provided or not is judged by the particulate amount of capture estimation unit 33 of the ECU 31. When the capture capability was judged to be above a fixed specific value (for example, 50% of the amount of saturated capture), the operation in which temperature rise control for DPF regeneration is not performed as specified is performed. When the capture capability is judged to be less than the fixed specific value, the exhaust temperature is raised for a predetermined period of time and the DPF is regenerated.

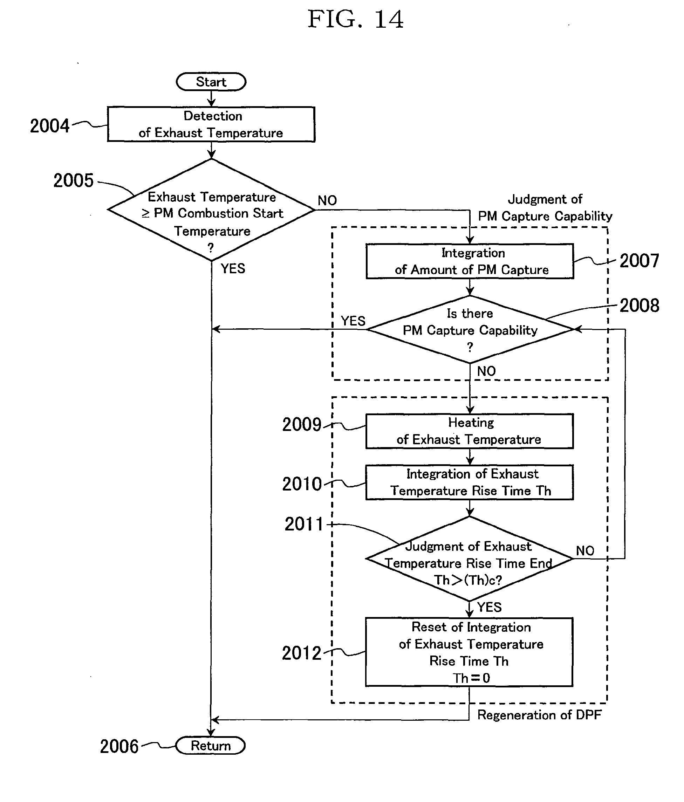

Fig. 14 is a flowchart of temperature control (DPF regeneration control).

First, in a step 2004, an exhaust temperature is detected. In a step 2005, the size between the exhaust temperature and PM combustion start temperature is compared. The PM combustion start temperature to be compared here is the temperature at which the speed of PM combustion and purification exceeds a capture speed in the DPF 4, and is determined by previously estimating the characteristics of the DPF 4.

If the condition of exhaust temperature $\geq$ PM combustion start temperature is satisfied, processing advances to a step 2006, an operation is performed as specified without performing the regeneration operation of the DPF 4.

On the contrary, if the condition of exhaust temperature > PM combustion start temperature is satisfied, processing advances to a step 2007. In the step 2007, the estimation operation of the amount of PM capture is performed. An estimation operation method is described later.

Subsequently, in a step 2008, whether the estimated amount of PM capture is below a fixed critical amount or not is judged. The amount of critical capture previously estimates PM capture characteristics of a DPF by means of experiment, and the PM in an exhaust gas is set in a value that can be purified sufficiently.

When PM capture capability is provided, processing advances to the step 2006, and an operation is performed as specified without performing the regeneration operation of the DPF. When the PM capture capability is not provided, processing advances to a step 2009. The amount of supplied heat of the diesel engine 1 is determined, and an exhaust temperature is raised.

In a step 2010, an exhaust temperature rise time Th is counted and integrated, and, in a step 2011, whether an elapsed time Th exceeds a fixed time $(Th)c$ or not is judged. An exhaust temperature rise is performed only for the fixed time $(Th)c$. When the elapsed time exceeds the fixed time $(Th)c$, in a step 2012, an integrated value of the exhaust temperature rise time Th is reset (cleared), and the exhaust temperature rise is terminated.

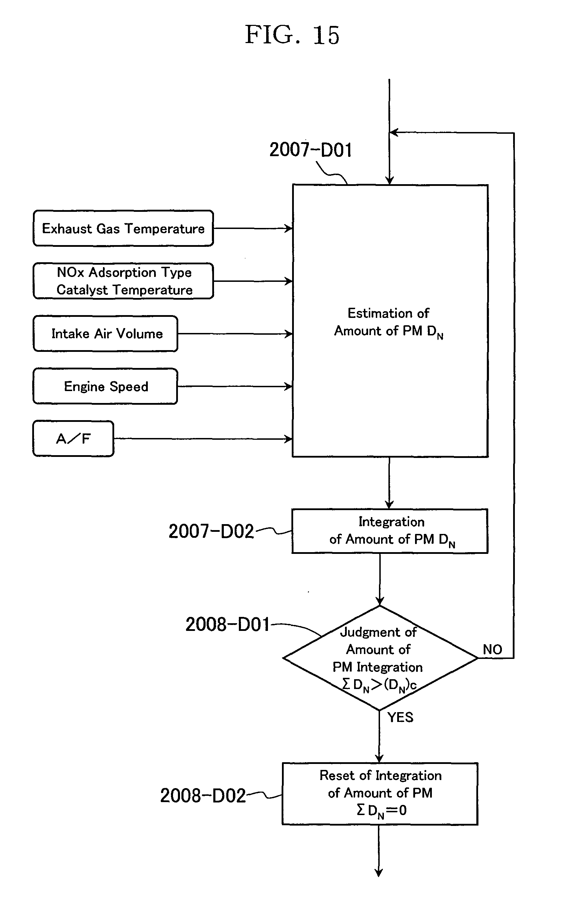

The amount of DPF capture estimation processing by the amount of DPF capture estimation unit 34 is described with reference to Figs. 15 to 17.

Fig. 15 is a flowchart of the processing that integrates and judges the amount of DPF collection from various operation conditions during a lean operation.

In a step 2007-D01, a signal regarding the actuation condition of a DPF, such as an exhaust gas temperature, and a signal regarding various engine operation conditions that affect the PM concentration in the exhaust gas are read, and an amount of PM $D_N$ that is adsorbed in a unit hour is estimated. In a step 2007-D02, the $D_N$ is integrated, and, in a step 2008-D01, the size between an integrated value $\Sigma D_N$ and the upper limit value $(D_N)c$ of the amount of collection is compared. If the condition of $\Sigma D_N \leq (D_N)c$ is satisfied, integration is continued. If the condition of $\Sigma D_N > (D_N)c$ is satisfied, in a step of 2008-D02, the integration is reset and processing advances to the step 2009.

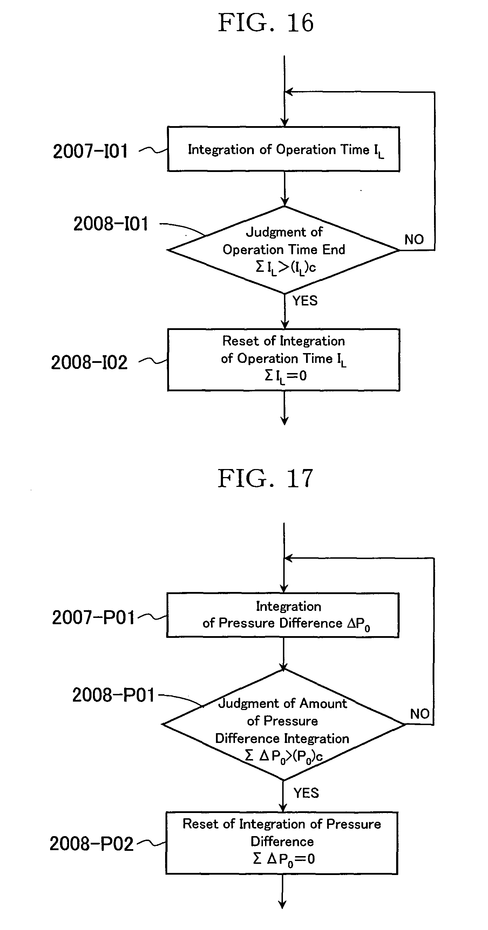

Fig. 16 is a flowchart of the processing that judges an operation time from an integration time of the operation in which the temperature rise control for DPF regeneration is not performed.

In a step 2007-101, an operation time $I_L$ at which the temperature rise control for the DPF regeneration is not performed is integrated, and the size between an integrated value $\Sigma I_L$ and the upper limit value $(I_L)c$ of an integration time is compared. If the condition of $\Sigma I_L \leq (I_L)c$ is satisfied, integration is continued. If the condition of $\Sigma I_L > (I_L)c$ is satisfied, in a step 2008-102, the integration is reset, and processing advances to the step 2009.

Fig. 17 is a flowchart of the processing that judges the amount of pressure difference integration using a pressure sensor signal during an operation in which the temperature rise control for DPF regeneration is not performed.

In a step 2007-P01, a pressure difference $\Delta P_0$ before and behind a DPF is integrated, and, in a step 2008-P01, an integrated value $\Sigma\Delta P_0$ and a specific value $P_0$ (c) is compared. When the $\Sigma\Delta P_0$ is less than the specific value $P_0$ (c), integration is continued. When the $\Sigma\Delta P_0$ exceeds the specific value $P_0(c)$, in a step 2008-P02, the integration is reset, and processing advances to the step 2009.

Industrial Applicability

An exhaust gas purifying apparatus according to this invention can apply to a diesel engine for vehicles such as automobiles, and can reduce and purify nitrogen oxides in an exhaust gas using an NOx adsorption and reduction type catalyst, and then can capture particulate matters in the exhaust gas by a diesel particulate filter, and can burn and purify an accumulated PM. At this time, carbon monoxide in which the particulate matters burn incompletely and which was produced can be oxidized and purified using either an oxidation catalyst or an HC adsorption and combustion catalyst, and air pollution can be prevented.

**Claims**

1. An exhaust gas purifying apparatus for a diesel engine, comprising:

   an NOx adsorption and reduction type catalyst that adsorbs and reduces NOx in an exhaust gas; and
   a diesel particulate filter that collects particulate matters in the exhaust gas from the upstream side of a flow of the exhaust gas, the catalyst and filter being arranged sequentially in an exhaust channel that exhausts the exhaust gas of the diesel engine.

2. The exhaust gas purifying apparatus for the diesel engine according to claim 1, wherein an oxidation catalyst is arranged on the downstream side of the diesel particulate filter viewed from the flow of the exhaust gas.

3. The exhaust gas purifying apparatus for the diesel engine according to claim 2, wherein the oxidation catalyst adsorbs NOx in the exhaust gas, and is a hydrocarbon adsorption and combustion type catalyst that burns and purifies the NOx.

4. The exhaust gas purifying apparatus for the diesel engine according to any one of claims 1 to 3, wherein heating means that heats the exhaust gas on the upstream side of the exhaust gas channel of the NOx adsorption and reduction type catalyst.

5. The exhaust gas purifying apparatus for the diesel engine according to any one of claims 1 to 4, further comprising heating means that heats the diesel particulate filter.

6. The exhaust gas purifying apparatus for the diesel engine according to any one of claims 1 to 5, further comprising:

   NOx amount estimation means that estimates an amount of NOx accumulated in the NOx adsorption and reduction type catalyst from a measured value of a physical quantity that stands for an operation condition of the diesel engine such as temperature, an air-fuel ratio, oxygen concentration, and a lean operation time of an exhaust gas that flows into the NOx adsorption catalyst; and
   control means that, when the amount of accumulated NOx estimated by the NOx amount estimation means reaches a fixed value, performs control of increasing the temperature of the exhaust gas that flows into the NOx adsorption and reduction type catalyst to temperature necessary for NOx reduction and purification, and supplying fuel that is a reducing agent necessary for reducing accumulated NOx to the exhaust gas.

7. The exhaust gas purifying apparatus for the diesel engine according to claim 6, wherein the fuel that is a reducing agent necessary for reducing NOx is supplied to the exhaust gas by increasing the amount of the fuel supplied to the diesel engine.

8. The exhaust gas purifying apparatus for the diesel engine according to claim 6, wherein the fuel that is a reducing agent necessary for reducing NOx is supplied to the exhaust gas by means of a fuel secondary injection that injects the fuel to an engine combustion chamber in an expansion stroke or an exhaust stroke of the diesel engine.

9. The exhaust gas purifying apparatus for the diesel engine according to any one of claims 1 to 8, further comprising:

   exhaust gas temperature measuring means that measures the temperature of the exhaust gas that flows into the diesel particulate filter;
   exhaust gas temperature judgment means that judges the exhaust gas temperature measured by the exhaust gas temperature measuring means is lower than a predetermined temperature;
   particulate capture amount estimation means that estimates an amount of particulates captured by the diesel particulate filter; and
   heating means that heats the exhaust gas, wherein
   control of heating the exhaust gas into the predetermined temperature is performed by the heating means, and the particulates captured by the diesel particulate are burned and removed when an estimated value of the amount of particulates estimated by the particulate capture amount estimation means reaches a predetermined capture amount, and the exhaust gas temperature is judged by the exhaust gas temperature judgment means to be lower temperature than the predetermined temperature.

10. The exhaust gas purifying apparatus for the diesel engine according to any one of claims 1 to 9, wherein the NOx adsorption and reduction type catalyst includes at least one type of element chosen from potassium, sodium, magnesium, strontium, and calcium, at least one type of element chosen from a rare earth metal such as cerium, at least one type of element chosen from precious metals such as platinum, rhodium, and palladium, and at least one type of an element chosen from titanium or silicon, and is a composite composed of a metal, metal oxides, or a compound oxide, or a composite in which the composite is carried in porous heat resistant metal oxides.

11. An exhaust gas purifying method of a diesel engine, comprising the steps of:

   arranging an NOx adsorption and reduction type catalyst that adsorbs and reduces NOx in an exhaust gas, and a diesel particulate filter that collects particulate matters in the exhaust gas from the upstream side of a flow of the exhaust gas sequentially in an exhaust gas channel that exhausts the exhaust gas of the diesel engine;
   reducing and purifying NOx in the exhaust gas by the NOx adsorption and reduction type catalyst; and
   collecting and removing diesel particulates in the exhaust gas by the diesel particulate filter.

FIG. 1

FIG. 2

FIG. 3

FIG. 4

FIG. 5

FIG. 6

| | Exhaust Gas Temperature Sensor | 10 |
| | NOx Adsorption Type Catalyst Temperature | |
| | Load Sensor | 35 |
| | Air Flow Sensor | 7 |
| | Engine Speed Sensor | 36 |
| | Throttle Opening Sensor | 37 |
| | Engine Coolant Temperature Sensor | 38 |
| | Oxygen (or A/F) Sensor | 9 |

14

32

NOx Adsorption Capacity Judgment of NOx Adsorption and Reduction Type Catalyst

Equal to or Above Adsorption Capability Specific Value → Air-Fuel Ratio Rich Shift

Below Adsorption Capability Specific Value → Lean Operation

31

Determination of Air-Fuel Ratio

Lean Operation

Rich Operation → Rich Operation

EP 1 544 428 A1

# FIG. 7

Start

1002 — Detection of Operation Condition

1003 — Determination of Air-Fuel Ratio

1004 — Detection of Air-Fuel Ratio

1005 — A/F ≤ Theoretical Air-Fuel Ratio ? — NO

YES

Judgment of NOx Adsorption Capability

Integration of NOx Adsorption Amount — 1007

Is There Adsorption Capability? — 1008

YES — NO

1009 — A/F Rich Shift

1010 — Integration of Rich Shift Time Tr

1011 — Judgment of Rich Shift Time End Tr>(Tr)c? — NO

YES

1012 — Reset of Integration of Rich Shift Time Tr Tr=0

Regeneration of NOx Adsorption and Reduction Type Catalyst

1006 — Return

19

FIG. 8

1007-E01

| Exhaust Gas Temperature |
| NOx Adsorption Type Catalyst Temperature |
| Intake Air Volume |
| Engine Speed |
| A／F |

Estimation of Amount of NOx $E_N$

1007-E02 — Integration of Amount of NOx $E_N$

1008-E01 — Judgment of Amount of NOx Integration $\sum E_N > (E_N)c$ — NO

YES

1008-E02 — Reset of Integration of Amount of NOx $\sum E_N = 0$

## FIG. 9

1007-H01 — Integration of Operation Time $H_L$

1008-H01 — Judgment of Operation Time End $\sum H_L > (H_L)c$ — NO

YES

1008-H02 — Reset of Integration of Operation Time $H_L$ $\sum H_L = 0$

## FIG. 10

1007-O01 — Integration of Amount of Oxygen $Q_0$

1008-O01 — Judgment of Amount of Oxygen Integration $\sum Q_0 > (Q_0)c$ — NO

YES

1008-O02 — Reset of Integration of Amount of Oxygen $\sum Q_0 = 0$

21

# FIG. 11

1007-N01 — Integration of Amount of NOx $Q_N$

1008-N01 — Judgment of Amount of NOx Integration $\sum Q_N > (Q_N)c$ → NO

YES

1008-N02 — Reset of Integration of Amount of NOx $\sum Q_N = 0$

# FIG. 12

1007-C01 — Detection of NOx Concentration

1008-C01 — Judgment of NOx Concentration $C_N > (C_N)c$ → NO

YES

FIG. 13

EP 1 544 428 A1

23

# FIG. 14

```
                    ┌─────────┐
                    │  Start  │
                    └─────────┘
                         │
                         ▼
2004 ──┐  ┌───────────────────────────┐
       │  │        Detection          │
          │   of Exhaust Temperature  │
          └───────────────────────────┘
                         │
                         ▼
2005 ──┐       ◇ Exhaust Temperature         NO          Judgment of
       │         ≥ PM Combustion Start  ──────────────   PM Capture Capability
                 Temperature ?                    │
                         │ YES                     ▼
                         │          ┌ ─ ─ ─ ─ ─ ─ ─ ─ ─ ─ ─ ─ ─ ─ ─ ┐
                         │              ┌───────────────────────────┐
                         │          │   │        Integration        │  ── 2007
                         │              │   of Amount of PM Capture  │
                         │          │   └───────────────────────────┘
                         │                       │
                         │          │            ▼
                         │            YES    ◇ Is there                ── 2008
                         │          ├────────  PM Capture Capability
                         │          │           ?
                         │          │            │ NO
                         │          └ ─ ─ ─ ─ ─ ─│─ ─ ─ ─ ─ ─ ─ ─ ─ ┘
                         │                        │
                         │          ┌ ─ ─ ─ ─ ─ ─│─ ─ ─ ─ ─ ─ ─ ─ ─ ┐
                         │              ┌───────────────────────────┐
                         │    2009 ──┐ │        Heating            │
                         │          │  │   of Exhaust Temperature  │
                         │             └───────────────────────────┘
                         │          │            │
                         │                       ▼
                         │          │ ┌───────────────────────────┐
                         │    2010 ──┐│  Integration of Exhaust   │
                         │          │ │ Temperature Rise Time Th  │
                         │            └───────────────────────────┘
                         │          │            │
                         │                       ▼
                         │    2011 ──┐  ◇ Judgment of Exhaust      NO
                         │          │    Temperature Rise Time End ───┐
                         │              Th > (Th)c?                   │
                         │          │            │ YES               │
                         │                       ▼                   │
                         │          │ ┌───────────────────────────┐  │
                         │            │    Reset of Integration   │  │
                         │          │ │  of Exhaust Temperature   │  │
                         │    2012 ──┐│      Rise Time Th         │  │
                         │          │ │        Th = 0             │  │
                         │            └───────────────────────────┘  │
                         │          └ ─ ─ ─ ─ ─ ─ ─ ─ ─ ─ ─ ─ ─ ─ ─ ┘
                         │                       Regeneration of DPF
                         ▼
2006 ──┐  ┌─────────┐
       │  │ Return  │
          └─────────┘
```

# FIG. 15

2007-D01

| Exhaust Gas Temperature | → |
|---|---|

| NOx Adsorption Type Catalyst Temperature | → |

| Intake Air Volume | → |

| Engine Speed | → |

| A／F | → |

Estimation of Amount of PM $D_N$

2007-D02 — Integration of Amount of PM $D_N$

2008-D01 — Judgment of Amount of PM Integration $\sum D_N > (D_N)_C$

NO

YES

2008-D02 — Reset of Integration of Amount of PM $\sum D_N = 0$

## FIG. 16

2007-I01 — Integration of Operation Time $I_L$

2008-I01 — Judgment of Operation Time End $\Sigma I_L > (I_L)c$

NO

YES

2008-I02 — Reset of Integration of Operation Time $I_L$ $\Sigma I_L = 0$

## FIG. 17

2007-P01 — Integration of Pressure Difference $\Delta P_0$

2008-P01 — Judgment of Amount of Pressure Difference Integration $\Sigma \Delta P_0 > (P_0)c$

NO

YES

2008-P02 — Reset of Integration of Pressure Difference $\Sigma \Delta P_0 = 0$

<div align="center">

**INTERNATIONAL SEARCH REPORT**

</div>

| International application No. |
| --- |
| PCT/JP03/10751 |

| A. CLASSIFICATION OF SUBJECT MATTER |
| --- |
| Int.Cl⁷ F01N3/08, F01N3/02, F01N3/24 |

According to International Patent Classification (IPC) or to both national classification and IPC

| B. FIELDS SEARCHED |
| --- |
| Minimum documentation searched (classification system followed by classification symbols)<br>Int.Cl⁷ F01N3/08, F01N3/02, F01N3/24, F01N3/28 |

| Documentation searched other than minimum documentation to the extent that such documents are included in the fields searched |
| --- |
| Jitsuyo Shinan Koho          1922–1996   Jitsuyo Shinan Toroku Koho   1996–2003<br>Kokai Jitsuyo Shinan Koho     1971–2003   Toroku Jitsuyo Shinan Koho   1994–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2002-129950 A (Toyota Motor Corp.),<br>09 May, 2002 (09.05.02),<br>Fig. 1<br>(Family: none) | 1,11<br>2-10 |
| Y | JP 3-74561 A (Mazda Motor Corp.),<br>29 March, 1991 (29.03.91),<br>Full text; Fig. 1<br>(Family: none) | 2-5,9 |
| Y | Microfilm of the specification and drawings annexed to the request of Japanese Utility Model Application No. 400702/1990(Laid-open No. 87332/1992) (Mitsubishi Motors Corp.),<br>29 July, 1992 (29.07.92),<br>Full text; all drawings<br>(Family: none) | 2-5,9 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 December, 2003 (02.12.03) | Date of mailing of the international search report<br>16 December, 2003 (16.12.03) |
| --- | --- |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/10751

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2001-50033 A (Hitachi, Ltd.),<br>23 February, 2001 (23.02.01),<br>Column 2, lines 5 to 15; Par. No. [0070]<br>(Family: none) | 6-8,10 |

Form PCT/ISA/210 (continuation of second sheet) (July 1998)